# EUROPÄISCHE PATENTANMELDUNG

(11) **EP 4 331 822 A1**
(43) Veröffentlichungstag der Anmeldung: **06.03.2024**
(21) Anmeldenummer: 23192579.3
(22) Anmeldetag: 22.08.2023
(51) Int. Cl.: B29D 30/66, B65G 47/14

(54) **VORRICHTUNG ZUM VEREINZELN UND AUSRICHTEN VON SPIKES**

(30) Priorität: 31.08.2022 DE 102022209027
(71) Anmelder: Continental Reifen Deutschland GmbH, 30165 Hannover (DE)
(72) Erfinder: Schlittenhard, Jan, 30165 Hannover (DE)
(74) Vertreter: Continental Corporation

(57) **Zusammenfassung**

Die Erfindung betrifft eine Vorrichtung (1) zum Vereinzeln und Ausrichten von Spikes (2) für PKW-Winterreifen mit einem Bunker (3) zum Zwischenlagern der Spikes (2) sowie dem unorientierten Abgeben der Spikes (2) und einer Orientierungseinheit (5) zum Orientieren der Spikes (2) und einer Schikane (8) zum Ausrichten der Spikes (2), wobei die Orientierungseinheit (5) ein Rollenstuhl (6) mit zwei Rollen (7) ist, wobei die zwei Rollen (7) dazu eingerichtet sind die Spikes (2) in Richtung der Rotationsachsen (R) der Rollen (7) durch die Schwerkraft (g) und die Rotation der Rollen (7) zu fördern und dabei zu orientieren, wobei die Rollen (7) zueinander beabstandet sind und wobei die Rollen (7) dazu eingerichtet sind sich an ihren sich zugewandten Seiten gegenläufig und entgegen der Schwerkraft (g) zu drehen. Weiterhin betrifft die Erfindung ein Verfahren zum Vereinzeln und Ausrichten von Spikes.

## Beschreibung

Die Erfindung betrifft eine Vorrichtung zum Vereinzeln und Ausrichten von Spikes für PKW-Winterreifen mit einem Bunker zum Zwischenlagern der Spikes sowie dem unorientierten Abgeben der Spikes und einer Orientierungseinheit zum Orientieren der Spikes und einer Schikane zum Ausrichten der Spikes.

Weiterhin betrifft die Erfindung ein Verfahren zum Vereinzeln und Ausrichten von Spikes für PKW-Winterreifen sowie PKW-Winterreifen mit Spikes.

Vorrichtungen der genannten Art zum Vereinzeln und Ausrichten von Spikes für PKW-Winterreifen sind bekannt. Es werden beispielsweise Spiralwendelförderer mit Vibrationsantrieb genutzt um Spikes zu vereinzeln und zu orientieren um die Spikes einer Schikane zum Ausrichten der Spikes zuzuführen. Derartige Spiralwendelförderer sind kostenintensiv und sind auf die spezifischen Geometrien von Spikes anzupassen. Eine Weiterentwicklung einer Spikegeometrie erforderte regelmäßig eine aufwändige Anpassung des verwendeten Spiralwendelförderers. Durch die notwendige Länge der Fördererstrecke und die Art der Förderung werden die Spikes mechanisch beansprucht, was beispielsweise zum Abrieb von Beschichtungen führt.

Vor diesem Hintergrund liegt der Erfindung die Aufgabe zugrunde, eine Vorrichtung und ein Verfahren bereitzustellen, die eine kostengünstigere sowie gegenüber Geometrieänderung von Spikes robustere Orientierung ermöglichen, wobei geringere mechanische Belastung auf die Spikes aufgebracht werden.

Diese Aufgaben werden gelöst mit einer Vorrichtung gemäß den Merkmalen des Patentanspruches 1 sowie einem Verfahren und einem PKW-Winterreifen gemäß den nebengeordneten Ansprüchen. Die Unteransprüche betreffen besonders zweckmäßige Weiterbildungen der Erfindung.

Erfindungsgemäß ist also eine Vorrichtung zum Vereinzeln und Ausrichten von Spikes für PKW-Winterreifen mit einem Bunker zum Zwischenlagern der Spikes sowie dem unorientierten Abgeben der Spikes und eine Orientierungseinheit zum Orientieren der Spikes und eine Schikane zum Ausrichten der Spikes vorgesehen, wobei die Orientierungseinheit ein Rollenstuhl mit zwei Rollen ist, wobei die zwei Rollen dazu eingerichtet sind die Spikes in Richtung der Rotationsachsen der Rollen durch die Schwerkraft und die Rotation der Rollen zu fördern und dabei zu orientieren, wobei die Rollen zueinander beabstandet sind, wobei die Rollen dazu eingerichtet sind sich an ihren sich zugewandten Seiten gegenläufig und entgegen der Schwerkraft zu drehen.

Die erfindungsgemäße Vorrichtung ermöglicht in überraschend einfacher Weise, Spikes, die unorientiert, beispielweise mit einem Vibrationsantrieb, aus einem Bunker gefördert werden, mittels zweier gegenläufiger Rollen und einem Spalt zwischen den Rollen zu orientieren. Durch die Art der Förderung und Orientierung der Spikes mit dem Rollenstuhl werden die Spikes mechanisch besonders wenig beansprucht. Die Vorrichtung ist aufgrund ihrer Art als Rollenstuhl besonders robust gegen Geometrieänderungen von Spikes ausgelegt und weiterhin durch eine einfache Anpassbarkeit der Spaltgeometrie in einfacher Form an größere Geometrieänderungen anpassbar.

Unter dem Orientieren von Spikes wird das Verringern der freien Freiheitsgrade der Spikes verstanden, wobei zumindest ein oder zumindest zwei Freiheitsgrade der Spikes nicht eingeschränkt werden. Das Ausrichten der Spikes verringert die Anzahl der freien Freiheitsgrade der bereits orientierten Spikes weiter auf höchstens einen Freiheitsgrad, bevorzugt auf keinen Freiheitsgrad, die Ausrichtung des Spikes betreffend. Die Spikes können keine, eine oder mehrere Symmetrieebenen oder Rotationsachsen aufweisen.

Eine bevorzugte Ausführungsform sieht vor, dass der Bunker dazu eingerichtet ist, unmittelbar auf einen Rollenstuhl zu fördern. Hierdurch kann ein besonders günstiger sowie kompakter Aufbau der Vorrichtung erreicht werden.

Eine weitere bevorzugte Ausführungsform sieht vor, dass die Vorrichtung eine Vereinzelungsanlage, insbesondere ein Vibrationsförderer, ein Stufenhub und/oder eine Zuführrinne, zum Zuführen der Spikes von dem Bunker zu dem Rollenstuhl aufweist. Durch die Vereinzelungsanlage, die bevorzugt eine Übergabeeinheit aufweist, können Spikes dem Rollenstuhl in einem teilweise definierten Zustand zugeführt werden und räumlich voneinander beabstandet werden. Das Beabstanden vermeidet ein Verklemmen in der Schikane. Bevorzugt kann bereits eine Vororientierung durchgeführt werden.

Eine weitere bevorzugte Ausführungsform sieht vor, dass die Rollen derart zu der Schikane angeordnet sind, dass die Spikes mit den Rollen zu der Schikane gefördert werden. Das Anordnen der Schikane unmittelbar an den Rollen ermöglicht den Entfall einer zusätzlichen Fördereinheit.

Eine weitere bevorzugte Ausführungsform sieht vor, dass die Achsen der Rollen nicht parallel zueinander angeordnet sind und beziehungsweise oder der geringste Abstand der Rollenoberflächen zueinander in Förderrichtung größer wird. Durch einen sich in Fördereinrichtung vergrößernden Spalt wird eine erste Orientierung der Spikes auf dem Rollenstuhl ermöglicht, wobei die axiale Ausrichtung der Spikes der Ausrichtung der Rotationsachsen der Rollen entspricht. Weiterhin wird im Bereich eines größeren Spalts eine zweite Orientierung der Spikes auf dem Rollensuhl ermöglicht, wobei der Spike mit einem in Richtung der Schwerkraft g nach unten ausgerichtetem Kopf orientiert wird. Hierdurch wird besonders prozesssicher eine Ausrichtung der Spikes erreicht.

Eine weitere bevorzugte Ausführungsform sieht vor, dass der Bunker dazu eingerichtet ist die Spikes schwerkraftgetrieben und beziehungsweise oder vibrationsgetrieben auszugeben und beziehungsweise oder zu vereinzeln. Eine schwerkraftgetriebene Ausgabe der Spikes führt zu einer besonders geringen mechanischen Belastung der Spikes, wobei eine vibrationsgetriebene Ausgabe besonders prozesssicher realisierbar ist.

Eine weitere bevorzugte Ausführungsform sieht vor, dass die Vorrichtung einen Förderschlauch und eine Spikesetzvorrichtung aufweist. Das Vorsehen eines Förderschlauchs und einer Spikesetzvorrichtung an der Vorrichtung ermöglicht es in einfacher und kompakter Form eine Vorrichtung bereitzustellen, die die Handhabung von Spikes von unorientiertem Schüttgut bis in den PKW-Winterreifen ermöglicht.

Erfindungsgemäß ist ein Verfahren zum Vereinzeln und Ausrichten von Spikes für PKW-Winterreifen, insbesondere mit einer erfindungsgemäßen Vorrichtung vorgesehen, wobei Spikes unorientiert aus einem Bunker ausgegeben werden und mit einer Orientierungseinheit orientiert werden und folgend mit einer Schikane ausgerichtet werden, wobei das Orientieren der Spikes durch ein gegenläufiges Drehen von Rollen an ihren sich zugewandten Seiten entgegen der Schwerkraft erfolgt.

Das erfindungsgemäße Verfahren ermöglicht es in überraschend einfacher Weise Spikes unorientiert aus einem Bunker zu entnehmen sie durch eine gegenläufige Rotation zu orientieren und folgend auszurichten. Die Orientierung und Förderung der Spikes erfolgten hierbei in einer mechanisch besonders schonenden Form. Das Verfahren ist robust gegen Geometrieänderungen von Spikes.

Eine bevorzugte Ausführungsform sieht vor, dass die ausgerichteten Spikes mit einem Förderschlauch einer Spikesetzvorrichtung zugeführt werden und in einen PKW-Winterreifen eingebracht werden. Es wird ein einfaches und prozesssicheres Verfahren bereitgestellt, dass das Einbringen von zuvor unorientierten Spikes in PKW-Winterreifen ermöglicht.

Erfindungsgemäß ist ein PKW-Winterreifen mit Spikes vorgesehen, wobei die PKW-Winterreifen durch ein erfindungsgemäßes Verfahren herstellbar sind, insbesondere mit einer erfindungsgemäßen Vorrichtung. PKW-Winterreifen, die mit dem erfindungsgemäßen Verfahren hergestellt worden sind, weisen Spikes auf, die durch die Förderung und Orientierung in der Orientierungseinheit besonders geringen mechanischen Belastung ausgesetzt worden sind. Sie weisen hierdurch einen besonders geringen mechanischen Verschleiß auf, was insbesondere bei Beschichtungen relevant ist.

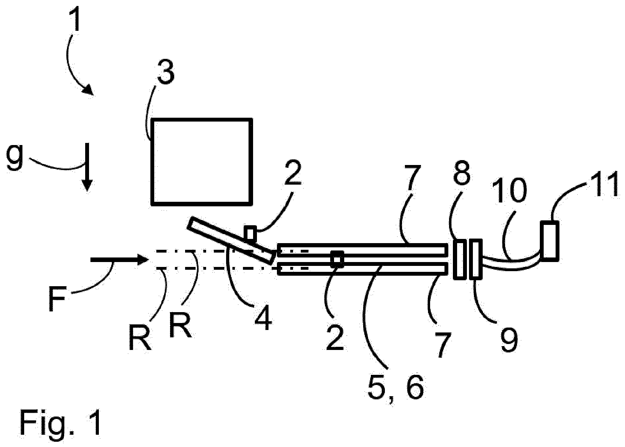

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
Fig. 1 eine Vorrichtung zum Vereinzeln, Ausrichten und Setzen von Spikes.

Figur 1 zeigt eine Vorrichtung 1 zum Vereinzeln, Ausrichten und Setzen von Spikes 2. Die Vorrichtung 1 weist einen Bunker 3 zum unorientierten Zwischenlagern der Spikes 2 auf. Der Bunker 3 gibt die Spikes 2 durch die Schwerkraft g angetrieben in unorientierter Form an eine Vereinzelungsanlage 4 in Form eines Vibrationsförderers ab. Die Spikes 2 gelangen entlang der Vereinzelungsanlage 4 durch die Schwerkraft g getrieben auf eine Orientierungseinheit 5, die als ein Rollenstuhl 6 ausgeprägt ist.

Der Rollenstuhl 6 weist zwei Rollen 7 auf, deren Rotationsachsen R in Fördereinrichtung F der Spikes 2 eine Richtungskomponente in Richtung der Schwerkraft g aufweisen, also in Förderrichtung F abschüssig ausgerichtet sind. Die Rotationsachsen R verlaufen senkrecht zur Schwerkraft g nicht parallel, sondern so, dass der Abstand der zylinderförmigen Rollenoberflächen zueinander sich in Fördereinrichtung F vergrößert. Die Ausrichtung der zwei Rotationsachsen R kann unabhängig voneinander sowohl in vertikaler als auch horizontaler Richtung erfolgen.

Die Rollen 7 haben jeweils eine vorgesehene Rotationsrichtung, so dass sich die zugewandten Seiten der Rollen 7 entgegen der Schwerkraft g bewegen. Der sich zwischen den Rollen 7 befinden Spike 2 erfährt somit durch die Rotation der Rollen 7 eine Kraft, die überwiegend entgegen der Schwerkraft g ausgerichtet ist, wobei der Spike 2 aufgrund der Ausrichtung der Rotationsachsen R durch die Schwerkraft g entlang der Rollen 7 befördert wird.

Aufgrund des sich in Fördereinrichtung F vergrößernden Spaltes zwischen den Rollen 7 befindet sich der Spike 2 beim Auftreffen auf den Rollenstuhl 6 in einem schmalen Spalt zwischen den Rollen 7. Der der Fuß sowie der Kopf des Spikes 2 haben einen Durchmesser, der größer ist als der schmale Spalt. Der Spike 2 orientiert sich daher mit seiner axialen Achse in Richtung der Rotationsachsen R.

Aufgrund der vereinfacht betrachtet ovalen Form des Fußes und der durch die Rollen 7 auf ihn aufgebrachten Kräfte, nimmt der Spike 2 eine Orientierung an, in der die kleinste radiale Ausdehnung des Fußes in Richtung der Schwerkraft g unten angeordnet ist.

So orientiert wird der Spike 2 entlang der Fördereinrichtung F gefördert, bis der Spalt eine Breite aufweist, die größer ist als der Durchmesser des Kopfes des Spikes 2. Ist diese Breite des Spalts erreicht rotiert der Spike 2, sodass der Spike 2 mit dem Kopf nach unten und der schmalen Seite des Fußes in Fördereinrichtung F nach vorne orientiert, weiter gefördert wird.

Der Spike 2 wird mit den Rollen 7 einer Schikane 8 zugeführt, wobei der Spike 2 durch die Schikane 8 mit in Fördereinrichtung F dem Fuß nach vorne und mit der kleinsten radialen Ausdehnung des Fußes parallel zur Richtung der Schwerkraft g ausgerichtet wird.

Derart ausgerichtet gelangt der Spike 2 in eine Übergabestation 9 und wird von dieser durch einen Förderschlauch 10 zu einer Spikesetzvorrichtung 11 gefördert. Mit der Spikesetzvorrichtung 11 werden die Spikes 2 in PKW-Winterreifen eingebracht.

### Bezugszeichenliste

- 1: Vorrichtung
- 2: Spike
- 3: Bunker
- 4: Vereinzelungsanlage
- 5: Orientierungseinheit

- 6: Rollenstuhl
- 7: Rollen
- 8: Schikane
- 9: Übergabestation
- 10: Förderschlauch

- 11: Spikesetzvorrichtung

- g: Schwerkraft
- F: Förderrichtung
- R: Rotationsachsen

## Patentansprüche

1. Vorrichtung (1) zum Vereinzeln und Ausrichten von Spikes (2) für PKW-Winterreifen mit einem Bunker (3) zum Zwischenlagern der Spikes (2) sowie dem unorientierten Abgeben der Spikes (2) und einer Orientierungseinheit (5) zum Orientieren der Spikes (2) und einer Schikane (8) zum Ausrichten der Spikes (2), **dadurch gekennzeichnet, dass**
die Orientierungseinheit (5) ein Rollenstuhl (6) mit zwei Rollen (7) ist, wobei die zwei Rollen (7) dazu eingerichtet sind die Spikes (2) in Richtung der Rotationsachsen (R) der Rollen (7) durch die Schwerkraft (g) und die Rotation der Rollen (7) zu fördern und dabei zu orientieren, wobei die Rollen (7) zueinander beabstandet sind, wobei die Rollen (7) dazu eingerichtet sind sich an ihren sich zugewandten Seiten gegenläufig und entgegen der Schwerkraft (g) zu drehen.

2. Vorrichtung (1) nach Anspruch 1, **dadurch gekennzeichnet, dass** der Bunker (3) dazu eingerichtet ist unmittelbar auf einen Rollenstuhl (6) zu fördern.

3. Vorrichtung nach Anspruch 1, **dadurch gekennzeichnet, dass** die Vorrichtung eine Vereinzelungsanlage (4), insbesondere ein Vibrationsförderer, ein Stufenhub und/oder eine Zuführrinne, zum Zuführen der Spikes (2) von dem Bunker (3) zu dem Rollenstuhl (6) aufweist.

4. Vorrichtung (1) nach einem der vorangehenden Ansprüche, **dadurch gekennzeichnet, dass** die Rollen (7) derart zu der Schikane (8) angeordnet sind, dass die Spikes (2) mit den Rollen (7) zu der Schikane (8) gefördert werden.

5. Vorrichtung (1) nach einem der vorangehenden Ansprüche, **dadurch gekennzeichnet, dass** die Rotationsachsen (R) der Rollen (7) nicht parallel zueinander angeordnet sind und/oder der geringste Abstand der Rollenoberflächen zueinander in Förderrichtung (F) größer wird.

6. Vorrichtung (1) nach einem der vorangehenden Ansprüche, **dadurch gekennzeichnet, dass** der Bunker (3) dazu eingerichtet ist die Spikes (2) schwerkraftgetrieben und/oder vibrationsgetrieben auszugeben und/oder zu vereinzeln.

7. Vorrichtung (1) nach einem der vorangehenden Ansprüche, **dadurch gekennzeichnet, dass** die Vorrichtung (1) einen Förderschlauch (10) und eine Spikesetzvorrichtung (11) aufweist.

8. Verfahren zum Vereinzeln und Ausrichten von Spikes (2) für PKW-Winterreifen, insbesondere mit einer Vorrichtung (1) nach einem der vorangehenden Ansprüche, wobei Spikes (2) unorientiert aus einem Bunker (3) ausgegeben werden und mit einer Orientierungseinheit (5) orientiert werden und folgend mit einer Schikane (8) ausgerichtet werden, **dadurch gekennzeichnet, dass** das Orientieren der Spikes (2) durch ein gegenläufiges Rotieren von Rollen (7) an ihren sich zugewandten Seiten entgegen der Schwerkraft (g) erfolgt.

9. Verfahren nach Anspruch 8, **dadurch gekennzeichnet, dass** die ausgerichteten Spikes (2) mit einem Förderschlauch (10) einer Spikesetzvorrichtung (11) zugeführt werden und in einen PKW-Winterreifen eingebracht werden.

10. PKW-Winterreifen mit Spikes (2), **dadurch gekennzeichnet, dass** die PKW-Winterreifen durch eine Verfahren nach einem der Ansprüche 8 oder 9 herstellbar sind, insbesondere mit einer Vorrichtung nach einem der Ansprüche 1 bis 7.
